# EUROPEAN PATENT APPLICATION

(11) **EP 4 706 908 A1**
(43) Date of publication of application: **11.03.2026**
(21) Application number: 24841104.3
(22) Date of filing: 18.07.2024
(51) Int. Cl.: B25J 11/00, B25J 9/16

(54) **METHOD AND APPARATUS FOR EXECUTING USER TASK, AND DEVICE AND MEDIUM**

(71) Applicant: Beijing Youzhuju Network Technology Co., Ltd., Beijing 101299 (CN)
(72) Inventor: WU, Hongtao., Beijing 100028 (CN); KONG, Tao., Beijing 100028 (CN)
(74) Representative: Grünecker Patent- und Rechtsanwälte PartG mbB
(86) International application number: PCT/CN2024/106256
(87) International publication number: WO 2026/016141

(57) **Abstract**

Provided are a method, an apparatus, a device, and a medium for performing a user task. In a method, a media item provided by an electronic device is acquired. Key information is recognized from the media item in response to receiving a query request from a user, the key information including at least any one of the following: a character, a subtitle, a scene and sound in the media item, and a provider of the media item. Relevant data of the media item is determined based on the key information. A robot device provides the user with the relevant data of the media item. By using the example implementations of the present disclosure, the robot device can perform user tasks for complex queries in a complex physical space, such that the flexibility and accuracy of the robot device in performing the tasks in the complex environment can be improved, thereby completing anticipated user tasks.

## Description

### FIELD

Example implementations of the present disclosure generally relate to the field of robots, and in particular to a method, an apparatus, a device and a computer-readable storage medium for performing a user task.

### BACKGROUND

With rapid development, robotics has been widely applied in many technical fields. Currently, a variety of special-purpose robot devices have been developed. For example, in industrial environments, robots can be used to perform various tasks such as processing, grasping, sorting, and packaging. For another example, in home environments, sweeping robots, glass-wiping robots and the like have been developed. However, these robots can usually only perform pre-set fixed tasks and cannot perform different user tasks according to the user's needs.

### SUMMARY

In a first aspect of the present disclosure, a method for performing a user task is provided. In the method, a media item provided by an electronic device is acquired. Key information is recognized from the media item in response to receiving a query request from a user, the key information including at least one of the following: a character, a subtitle, a scene and sound in the media item, and a provider of the media item. Relevant data of the media item is determined based on the key information. A robot device provides the user with the relevant data of the media item.

In a second aspect of the present disclosure, an apparatus for performing a user task is provided. The apparatus includes: an acquiring module configured to acquire a media item provided by an electronic device; a recognizing module configured to recognize key information from the media item in response to receiving a query request from a user, the key information including at least one of the following: a character, a subtitle, a scene and sound in the media item, and a provider of the media item; a determining module configured to determine relevant data of the media item based on the key information; and a providing module configured to cause a robot device to provide the user with the relevant data of the media item.

In a third aspect of the present disclosure, an electronic device is provided. The electronic device includes: at least one processing unit; and at least one memory coupled to the at least one processing unit and storing instructions for execution by the at least one processing unit, the instructions, when executed by the at least one processing unit, causing the electronic device to execute the method according to the first aspect of the present disclosure.

In a fourth aspect of the present disclosure, a computer-readable storage medium storing a computer program thereon is provided, wherein the computer program, when executed by a processor, causes the processor to implement the method according to the first aspect of the present disclosure.

In a fifth aspect of the present disclosure, a computer program product is provided. The computer program product includes a computer program, wherein the computer program, when executed by a processor, implements the method according to the first aspect of the present disclosure.

It would be appreciated that the content described in the Summary section of the present invention is neither intended to identify key or essential features of the implementations of the present disclosure, nor is it intended to limit the scope of the present disclosure. Other features of the present disclosure will be readily envisaged through the following description.

### BRIEF DESCRIPTION OF THE DRAWINGS

The above and other features, advantages and aspects of the implementations of the present disclosure will become more apparent in combination with the accompanying drawings and with reference to the following detailed description. In the drawings, the same or similar reference symbols refer to the same or similar elements, where:
FIG. 1 illustrates a block diagram of an application environment according to an example implementation of the present disclosure;
FIG. 2A and FIG. 2B illustrate block diagrams for performing user tasks according to some implementations of the present disclosure, respectively;
FIG. 3 illustrates a block diagram of a process of determining relevant data from an image according to some implementations of the present disclosure;
FIG. 4 illustrates a block diagram of a process of invoking a language model according to some implementations of the present disclosure;
FIG. 5 illustrates a block diagram of a process of recognizing an object from an image according to some implementations of the present disclosure;
FIG. 6 illustrates a block diagram of a process of invoking an action model according to some implementations of the present disclosure;
FIG. 7 illustrates a block diagram of a process of acquiring an object according to some implementations of the present disclosure;
FIG. 8 illustrates a flow chart of a method for performing a user task according to some embodiments of the present disclosure;
FIG. 9 illustrates a block diagram of an apparatus for performing a user task according to some embodiments of the present disclosure; and
FIG. 10 illustrates a block diagram of a device capable of implementing many implementations of the present disclosure.

### DETAILED DESCRIPTION

The implementations of the present disclosure will be described in more detail below with reference to the accompanying drawings. Although certain implementations of the present disclosure are illustrated in the accompanying drawings, it should be understood that the present disclosure can be implemented in various forms and should not be construed as being limited to the implementations described herein; instead, these implementations are provided for a more thorough and complete understanding of the present disclosure. It should be understood that the accompanying drawings and implementations of the present disclosure are for illustrative purposes only and are not intended to limit the protection scope of the present disclosure.

In the description of the implementations of the present disclosure, the term "include" and similar terms should be understood as open inclusion, that is, "including but not limited to". The term "based on" should be understood as "based at least in part on". The term "an implementation" or "the implementation" should be understood as "at least one implementation". The term "some implementations" should be understood as "at least some implementations". Other explicit and implicit definitions may also be included below. As used herein, the term "model" may represent the association relationship between various data. For example, the above association relationship may be obtained based on a variety of technical solutions currently known and/or to be developed in the future.

It is understandable that the data involved in the technical solution (including but not limited to the data itself, and the acquisition or use of the data) shall comply with the requirements of relevant laws, regulations and relevant provisions.

It is understandable that before the technical solution disclosed in each embodiment of the present disclosure is applied, the user should be informed of the type, scope of use, and usage scenarios, etc. of the personal information involved in the present disclosure and the user's authorization should be obtained in an appropriate manner in accordance with relevant laws and regulations.

For example, in response to receiving an active request from the user, a prompt message is sent to the user to clearly prompt the user that the operation requested to be performed will require acquisition and use of the user's personal information. Thus, the user can autonomously choose, according to the prompt message, whether to provide the personal information to the electronic device, application program, server or storage medium or other software or hardware that executes the operations of the technical solution of the present disclosure.

As an optional but non-limiting implementation, in response to receiving the user's active request, the manner of sending the prompt message to the user may be, for example, a pop-up window, in which the prompt message may be presented in text form. In addition, the pop-up window may also carry a selection control for the user to select "agree" or "disagree" to provide the personal information to the electronic device.

It is understandable that the above process of informing the user and obtaining the user's authorization is only illustrative and is not intended to limit the implementations of the present disclosure. Other manners that meet relevant laws and regulations may also be applied to the implementations of the present disclosure.

The term "in response to" as used herein refers to a state in which a corresponding event occurs or a condition is satisfied. It will be appreciated that the timing of executing a subsequent action in response to the event or condition is not necessarily strongly correlated with the time when the event occurs or the condition is satisfied. For example, in some cases, the subsequent action may be executed immediately when the event occurs or the condition is satisfied; while in other cases, the subsequent action may be executed after a certain period of time has passed since the event occurs or the condition is satisfied.

### EXAMPLE ENVIRONMENT

In recent years, robotics and machine learning technologies have been widely used in many application scenarios. However, these robots can usually only perform pre-set fixed tasks and cannot perform different user tasks according to the user's needs. In particular, in a complex application environment, it is difficult for a robot device to determine the user's need and then perform corresponding tasks.

At present, simple robot devices that perform specific tasks have been developed. However, such simple robot devices cannot understand complex user instructions, nor can they perform the desired tasks according to user instructions in a complex physical space. At this moment, it is expected that the operations of the robot can be controlled in an effective manner to perform the desired tasks.

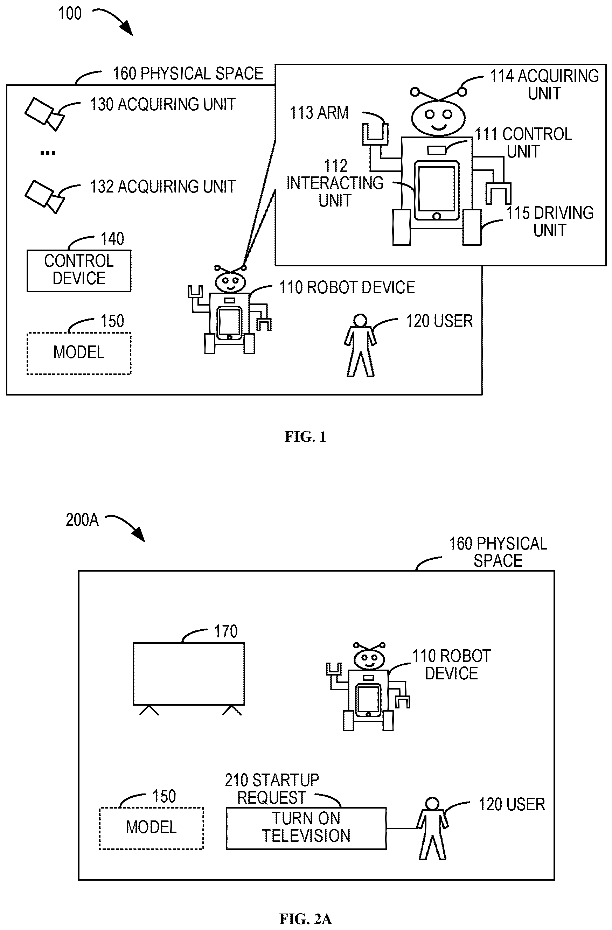

According to an example implementation of the present disclosure, a method for performing a user task is provided. Referring to FIG. 1, an application environment according to an example implementation of the present disclosure is described. FIG. 1 illustrates a block diagram 100 of an application environment according to an example implementation of the present disclosure. As illustrated in FIG. 1, a robot device 110 and a user 120 may be located in a physical space 160, and the user 120 may control the robot device 110 to perform a variety of tasks. The physical space 160 may include, but not limited to, one or more rooms. For example, in a home environment, the physical space 160 may include, but not limited to, a living room, a bedroom, a study, etc., or a combination of one or more of the above.

As illustrated in FIG. 1, the robot device 110 may include a plurality of parts. For example, a controlling unit 111 may serve as a control center of the robot device 110, and an application program may be loaded into the controlling unit 111 to control various parts of the robot device. The user 120 may use an interacting unit 112 to interact with the robot device 110, for example, to input control instructions to the robot device 110, so as to use the robot device 110 to perform a desired task. The robot device 110 may include an arm 113 for performing actions such as grasping and releasing. For example, the arm 113 may grasp a certain object and move the object to a desired location, etc.

Alternatively and/or additionally, the robot device 110 may further include an acquiring unit 114. Here, the acquiring unit 114 may involve many types, for example, an image acquiring unit, a sound acquiring unit, an environment acquiring unit, and the like. Alternatively and/or additionally, the robot device 110 may further include a sensing unit for detecting surrounding objects, for example, the distance between the robot and its surrounding objects may be detected based on laser, etc. The robot device 110 may further include a driving unit 115. For example, the robot device 110 may be deployed on a movable base, and the driving unit 115 may drive the wheels of the base to move along a desired path.

The physical space 160 may include one or more acquiring units 130, ..., and 132. For example, one or more image acquiring devices may be deployed in a room to acquire images of the room from various angles. The physical space 160 may include a controlling device 140, which may control one or more acquiring units 130, ..., and 132, etc., via a network (not shown). Alternatively and/or additionally, in a smart home environment, the controlling device 140 may control various electrical devices in the physical space 160.

Alternatively and/or additionally, a machine learning model (e.g., model 150) may be provided to manage the physical space 160. It should be understood that although FIG. 1 illustrates that the model 150 is located inside the physical space 160, alternatively and/or additionally, the model 150 may be located at a remote device outside the physical space 160, and the control device 140, the robot device 110, or other devices may access the remote model 150 via a network.

The model 150 may include one or more models. If the model 150 includes a plurality of models, these models may include many types of models. The model 150 may include, for example, at least a language model (LM) and an action model. The language model may have the ability to answer questions by learning from a large amount of corpus. The action model may control the robot device 110 to perform various actions. The model 150 may also include, for example, an image recognition model, a text recognition model, and the like.

As illustrated in FIG. 1, the user 120 may instruct the robot device 110 to operate various objects in the physical space 160. Here, the objects may be various items in a home environment. For example, the user 120 may instruct the robot device 110 to start up or shut down a household appliance in the physical space 160. For another example, the user 120 may instruct the robot device 110 to search for a target object and place the searched target object at a designated location, and so on.

### BRIEF PROCESS FOR PERFORMING TASK

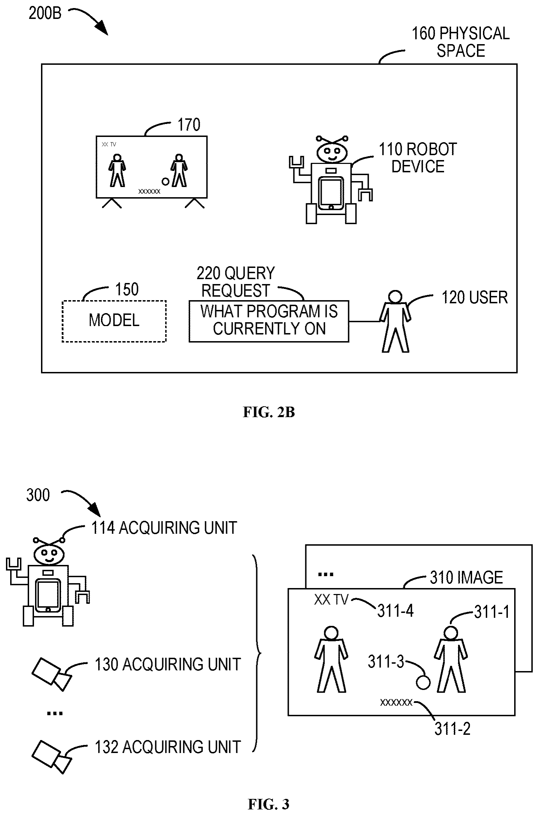

In order to at least partially remove the drawbacks in the prior art, according to an example implementation of the present disclosure, a method for performing a user task is provided. Referring to FIG. 2A and FIG. 2B, an overview of an example implementation according to the present disclosure is described. FIG. 2A and FIG. 2B illustrate block diagrams 200A and 200B for performing a user task according to some implementations of the present disclosure.

As illustrated in FIG. 2A, the robot device 110 in the physical space 160 (also referred to as a first physical space) may receive a startup request 210 from the user 120. At this point, the startup request 210 may instruct the robot device 110 to start up an electronic device 170 in the physical space 160. For example, the electronic device 170 in the example shown in FIG. 2A is a television, and the user 120 may say "Turn on the television" in a natural language. In response to receiving the startup request 210 from the user 120, the robot device 110 may start up the electronic device 170 in the physical space 160.

As an example, the robot device 110 may start up the television through a control device of the television. For example, the position of a control device or control panel of the television may be recognized and located by at least any one of the acquiring units 114, 130, ..., and 132. Secondly, the robot device 110 moves to the vicinity of the control device or control panel, such that the arm 113 of the robot device 110 can reach the control device or control panel. During this process, navigation and path planning are required to avoid collisions with other objects or furniture. Then, when arriving at a suitable position, the robot device 110 simulates a finger action using its arm 113 or finger to press a startup button. After the operation is completed, the robot device 110 may further confirm whether the television has been started up by detecting, for example, whether a television screen has been lighted up, or whether the television plays a startup sound or the like, by means of the acquiring unit 114. Further, in a case of detecting that the television cannot be started up normally, the robot device 110 may take emergency measures, for example, multiple attempts or reporting fault information to the user 120, or the like.

As another example, the robot device 110 may directly start up the television. For example, the robot device 110 may communicate with the television or its control device. For example, the television is connected via an infrared (IR) signal, Bluetooth, or Wi-Fi. The robot device 110 may turn on the television in response to a voice command (i.e., the startup request 210) of the user 120.

As shown in FIG.2B, after the electronic device 170 is normally started up, the robot device 110 may acquire a media item provided by the electronic device 170. For example, the robot device 110 may acquire a media item provided by the electronic device 170 via at least any one of the acquiring units 114, 130, ..., and 132.

As illustrated in FIG. 2B, in response to receiving a query request 220 of the user 120, the robot device 110 may provide the user 120 with the relevant data of the media item. For example, the user 120 may say "What program is currently on" in a natural language, and the robot device 110 may provide the user 120 with the relevant data of the acquired media item, for example, what program is currently on the television, the provider of the media item, etc.

According to some implementations of the present disclosure, the method described above may be performed at any computing device with computing capabilities. For example, the method described above may be performed using an application program deployed at the robot device 110. Alternatively and/or additionally, the application program may be deployed at the control device 140 to perform the above method. Specifically, the powerful processing capability of the model 150 may be invoked to acquire and recognize relevant data of the media item provided by the electronic device 170, after the electronic device 170 is started up. Then, the robot device 110 may provide the user 120 with the relevant data of the media item.

With the example implementations of the present disclosure, the robot device can perform user tasks in a complex physical space. In this way, the robot device may start up the electronic device in the physical space according to the user's startup request, acquire the media item provided by the electronic device after the electronic device is started up, and then provide the user with the relevant data of the media item when receiving the user's query request. In this way, the flexibility and accuracy of the robot device in performing tasks in a complex environment can be improved, thereby completing the anticipated user task.

### DETAILED PROCESS FOR PERFORMING TASK

The overview of some implementations according to the present disclosure has been described. In the following, more details about performing the user task will be described. For the convenience of description, the following describes more details of performing a user task by only taking controlling the robot device 110 to assist the user 120 to operate the television as an example.

According to some implementations of the present disclosure, the relevant data include at least any one of the following: audio data, video data, image data, and text data. As shown in FIG. 2B, the media item provided by the electronic device 170 may include movies, television programs, music, games, pictures, and any other content that may be played or displayed by the television. The media item may be stored on a hard drive inside the television or streamed from an on-line service provider over the Internet.

During this process, the user 120 may issue a query request to the robot device 110 via a voice command or other input methods. For example, while watching a television program, the user 120 may want to view relevant data of the current program, for example, the user 120 may say "What program is currently on" in a natural language.

When the robot device 110 receives the query request 220 of the user, the relevant data of the media item displayed by the television may be provided to the user 120. For example, the robot device 110 may provide, by playing audio data through a built-in speaker, the user 120 with audio comments, background music, audio track options or others related to media item. For another example, the robot device 110 is equipped with a display screen, which may play video content, such as related educational videos, entertainment clips and tutorials, so as to provide the user 120 with video data such as trailers and behind-the-scenes footage. For yet another example, the robot device 110 may display titles, subtitle, scripts, comments, news articles or other text data related to the media item through the display screen, or convey text data by means of the text-to-speech technology. In this way, the robot device 110 can provide visual means, auditory means or their combination to convey information. Through these different data types and presentation methods, the robot device 110 can adapt to various usage scenarios to meet the needs of different users.

According to some implementations of the present disclosure, the robot device 110 may recognize key information 311 from the media item and determine relevant data based on the key information 311. Referring to FIG. 3, more details of determination of the relevant data are described. FIG. 3 illustrates a block diagram 300 of a process of determining relevant data according to some implementations of the present disclosure. As illustrated in FIG. 3, for example, a first image (e.g., one or more images 310) of the electronic device 170 may be acquired by the acquiring unit 114 of the robot device 110. Since the robot device 110 may move freely in the physical space 160, the acquiring unit 114 may be directed at the electronic device 170 to thus acquire the image 310 of the media item.

Alternatively and/or additionally, the first image of the physical space 160 may be acquired by the acquiring units 130, ..., and 132. Here, the acquiring units 130, ..., and 132 may be pre-deployed in the physical space 160 at a specified location, for example, the ceiling at the top of the living room, etc. In this way, richer data can be acquired from multiple angles.

As shown in FIG. 3, the key information 311 of the media item includes at least any one of the following: a character 311-1, a subtitle 311-2, a scene 311-3 and sound in the media item, and a provider 311-4 of the media item. As an example, the robot device 110 may recognize the key information 311 from the image 310 based on the image recognition technology, and then determine the relevant data of the media item by searching for the key information 311 over the network. For example, the key information 311 includes a football player and a sports channel X, and the robot device 110 may determine detailed game information after searching on the network based on the key information 311.

Alternatively and/or additionally, the processing capabilities of the model may be invoked to recognize the key information 311 from the image 310. For example, the character 311-1 in the media item may refer to an actor or athlete recognized from a video, or a character recognized from an image. In a case of a video or movie with the subtitle 311-2, the robot device 110 may read and analyze the text in the subtitle to understand the content or dialog of the media item. The scene 311-3 refers to the background or environment in the media item, for example, a football field and game, an urban landscape, an indoor setting, or some other specific types of events. The sound refers to the specific sound recognized from the media item, for example, background music, sound effects or speaking sounds. The provider 311-4 of the media item refers to a creator, publisher or the like of media content, contributing to identification of the source and relevant information of the media.

With some implementations of the present disclosure, the relevant data may be determined based on the key information 311 in the media item. In this way, the accuracy of the relevant data provided to the user 120 can be ensured. At the same time, the robot device 110 may also recommend similar or related media content to the user 120 based on the recognized key information 311. In this way, the robot device 110 can extract deep information from the media item to facilitate better understanding and utilization of this data, making it possible to provide richer and more personalized services to the user 120.

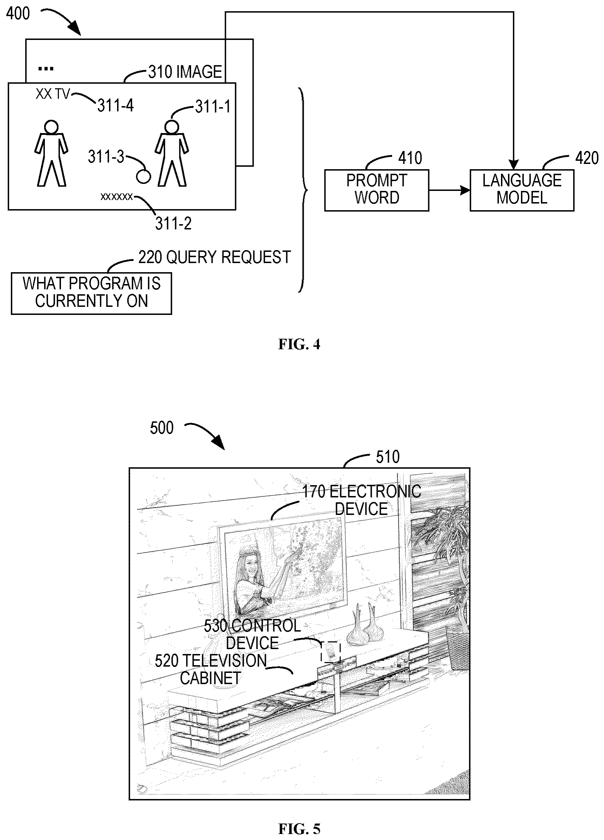

According to some implementations of the present disclosure, the relevant data may also be determined by means of a machine learning model and the key information. Referring to FIG. 4, more details of determination of the relevant data of the media item by the machine learning model are described. FIG. 4 illustrates a block diagram 400 of a process of determining relevant data of the media item according to some implementations of the present disclosure. For example, a prompt word 410 may be constructed and input to the machine learning model (such as a language model 420), such that the processing capabilities of the model can be invoked to determine the relevant data of the media item. For example, the prompt word 410 may be acquired based on the image 310, the key information 311, and the query request 220. The prompt word 410 may be expressed, for example, as "Please recognize the program content of the media item from the following image and key information", and the acquired image and the prompt word are submitted to the model. The model may process the image and recognize the intention of the prompt word, and may output a first response to the image and the prompt word, and then the relevant data of the media item is determined based on the first response.

With some implementations of the present disclosure, the relevant data of the media item can be determined in a variety of manners, such that the accuracy and comprehensiveness of the robot device in determining the relevant data are improved.

According to some implementations of the present disclosure, when assisting the user 120 in operating the electronic device 170, the robot device 110 may further provide information about the media item or the relevant data. For example, the robot device 110 may provide, in response to an acquiring request of the user for the relevant data or the media item, the user 120 with a response to the acquiring request. For example, the user 120 may ask the robot device 110 for the score of a sports game, as well as the season data of an athlete, etc.

Alternatively and/or additionally, a prompt word may be constructed based on the acquiring request and input to the machine learning model, so as to invoke the processing capabilities of the model to determine the intention of the user 120, thereby providing the user 120 with a detailed response. For example, if the user 120 asks "How is the XXX athlete doing in this game" in a natural language, the prompt word may be constructed, for example, as "the season average score of the XXX athlete, his/her score in this game, and whether the performance is average", or the like. Alternatively and/or additionally, the robot device 110 may access a web page related to the ball game and present the web page on an interacting unit 112. In this way, the user 120 are enabled to communicate with other users on the web page while watching the game.

According to some implementations of the present disclosure, the robot device 110 may further provide additional information of the media item based on the degree of attention of the user 120 to the media item. For example, the state data of the user 120 may be acquired by the acquiring unit 114 of the robot device 110, and the degree of attention of the user 120 to the media item may be determined based on the state data of the user 120. The robot device 110 may provide, in response to determining that the degree of attention of the user 120 is above a predetermined threshold, the user 120 with additional data associated with the media item. For example, the robot device 110 may determine and evaluate the user's state data by means of the acquiring unit 114. The state data may be, for example, the length of time spent on watching or listening. For example, the longer the time spent by the user 120 on watching a video or listening to audio, the higher the interest may be indicated. The state data may also be the frequency and type of interaction between the user 120 and the device, for example, asking a question or a facial reaction or the like, which may reflect the user's engagement.

Alternatively and/or additionally, the state data may be the physiological indicators of the user 120. For example, the physiological responses of the user 120 in terms of heart rate, pupil dilation or the like are determined by means of the acquiring unit, so as to more accurately judge the user's attention and emotional state or the like.

When the robot device 110 judges that the degree of attention of the user 120 exceeds a preset threshold, the robot device 110 at this point will, automatically or at the request of the user 120, provide more additional data related to the media item. The additional data may include in-depth content beyond the surface information of the media item, making it possible to enrich the user's 120 information source and understanding. For example, in case of watching a sports game or an athlete interview, the additional data may include the athlete's background information, so as to help the user 120 better evaluate the athlete's career stage and future potential. The additional data may also include personal growth experiences, shared athlete's growth stories and training journeys, which may increase emotional resonance to allow the audience to have a deeper understanding of the athlete's background and efforts.

With some implementations of the present disclosure, the robot device 110 not only provides basic media playback services, but also may dynamically adjust the content according to the specific needs and interests of the user 120, thereby providing more personalized and immersive services.

According to some implementations of the present disclosure, in response to determining that the degree of attention of the user 120 is below a predetermined threshold, the user 120 may be provided with a message used to ask the user 120 if he/she wishes to switch the media item. Next, in response to receiving a switching request of the user 120 for switching the media item, a data channel that matches the switching request is determined; and the robot device is instructed to switch the data source of the electronic device to the data channel. For example, the robot device 110 continuously determines the degree of attention of the user 120 to the currently playing media item by means of the acquiring unit. For example, the eye movement trajectory, facial expression and body posture of the user 120, the user's frequency of interaction with the electronic device 170, and even his/her physiological characteristics (such as heart rate changes) or the like are acquired.

Next, when it is evaluated that the user 120 shows reduced interest in the current content, that is, the degree of attention is lower than the preset threshold, the robot device 110 will actively ask the user 120 whether he/she wishes to change the media content being played. For example, the message may be presented to the user 120 in the form of a pop-up window, a voice prompt, or prompt information on the screen, providing the user 120 with a clear opportunity to choose. If the user 120 is not interested in the current content, the user 120 may choose to confirm the switching request. For example, this may be done by clicking the confirm button, giving a voice command, or performing other pre-set actions.

Further, when the user 120 expresses the wish to switch the media item, the robot device 110 needs to determine a new data source, for example, a data channel that matches the switching request may be determined according to the use history of the user 120, a recommendation algorithm or an option specified instantly by the user 120.

Finally, the robot device 110 performs an actual switching operation to change the data source of the television to a newly determined data channel. In this way, the playback of the current media item may be stopped, and a new media item selected by the user 120 may be loaded and played.

With some implementations of the present disclosure, the robot device 110 can flexibly respond to the changes in the needs of the user 120, making it possible to provide more personalized and timely services.

Alternatively and/or additionally, the robot device 110 may also provide the user 120 with a control device of the electronic device 170, whereby the user 120 changes the data source of the electronic device 170 to a newly determined data channel. Further, the user 120 can be facilitated in switching the data source at any time by utilizing this control device.

According to some implementations of the present disclosure, the robot device 110 may further determine a plurality of types of a plurality of media items provided by a plurality of data sources of the electronic device 170, respectively. Next, a data source that matches the switching request is selected from the plurality of data sources. For example, the robot device 110 may recognize and classify a variety of media content played by different data sources connected to the electronic device 170 (e.g., a television). The data source may be a satellite television service, a cable television network, an Internet streaming media service, a local media library or the like, which may provide different types of media items, such as music, sports games, movies, news and educational programs. The robot device 110 classifies these media items into multiple types by analyzing metadata, channel lists, content tags or the like, so as to facilitate subsequent screening and selection. When the user 120 makes a request of switching the media item, the robot device 110 selects a data source, that meets the requirements, from numerous data sources according to the user's interests, the current situation, or an explicit user instruction.

Alternately and/or additionally, the processing capabilities of the machine learning model may be used to select the data source that matches the switching request. For example, a prompt word for what the user wishes to watch or listen to is constructed and input to the model. Based on the prompt word, the model may output a response to the prompt word, and then a data source that may provide the corresponding type of media item is searched for based on the response. Next, after a matching data source is found, the robot device 110 switches the data source of the electronic device 170 to this data source, and the playback of the media content expected by the user is started.

For example, when the user wishes to switch from a current news program to a live sports game, as long as the user 120 expresses this wish to the robot device 110, the robot device 110 will quickly locate, from a plurality of data sources, the television station that provides sports content, and then complete switching, allowing the user to seamlessly access the media content of interest.

With some implementations of the present disclosure, the robot device 110 can intelligently perform media content management and personalized services, such that the user's ability to acquire information is enhanced, enabling the user to quickly find his/her favorite content in abundant media resources.

According to some implementations of the present disclosure, when the robot device 110 is instructed to switch the data source of the electronic device 170 to the data channel, the robot device 110 may be instructed to acquire a control device for switching the data source of the electronic device, and then to provide the user 120 with the control device, such that the user 120 inputs a switching instruction for switching the data source. For example, when the user 120 wants to directly control the switching of a data source, the robot device 110 is instructed to acquire a control device, which may be, for example, a remote control, a control panel or other types of user interface devices, such that the user may manually enter a switching instruction.

After the robot device 110 acquires the control device, the control device may be provided to the user 120. For example, the robot device 110 delivers a remote control to the user 120, or the robot device 110 displays a virtual control panel through its own display screen, or is wirelessly connected to the intelligent terminal (for example, a mobile phone or tablet computer) of the user 120, such that the user 120 may conduct operation on his/her own terminal device. After receiving the control device, the user 120 may directly input a switching instruction to the control device according to his/her own needs and preferences. For example, the user may select a specific channel, browse a program list, search for a specific type of content or the like.

With some implementations of the present disclosure, the robot device 110 may not only perform tasks automatically, but also provide more personalized and customized services according to the needs and interests of the user 120. With the introduction of the control device, the robot device 110 enhances the interaction between the user 120 and the electronic device 170, making the whole switching process more intuitive and friendly.

According to some implementations of the present disclosure, when the robot device 110 is instructed to acquire the control device, a second image of the physical space 160 may be acquired; next, the position of the control device is located based on the second image; and then, the robot device 110 is instructed to acquire the control device from the determined position. Referring to FIG. 5, more details of acquiring the control device are described. FIG. 5 illustrates a block diagram 500 of a process of acquiring a control device according to some implementations of the present disclosure. As illustrated in FIG. 5, for example, a second image (e.g., one or more images 510) of the physical space 160 may be acquired by the acquiring unit 114 of the robot device 110. Since the robot device 110 is freely movable in the physical space 160, the acquiring unit 114 may acquire second images 510 of various positions in the physical space 160, so as to facilitate the searching of the control device 530.

Alternatively and/or additionally, the second image of the physical space 160 may be acquired by the acquiring units 130, ..., and 132. Here, the acquiring units 130, ..., and 132 may be pre-deployed at specified positions in the physical space 160, for example, the ceiling of the living room, etc. In this way, a second image of the physical space 160 can be taken from a bird's-eye view, which facilitates the overall understanding of the layout of the physical space 160 and thus the locating of the control device.

According to some implementations of the present disclosure, the control device 530 in the second image may be determined in a variety of manners. For example, the control device 530 may be recognized from the second image based on the image recognition technology. Alternatively and/or additionally, a prompt word may be constructed and input to the model, so as to invoke the processing capabilities of the model to recognize the control device 530 from the second image. The prompt word may be expressed, for example, as: "Please recognize the 'control device' from the following image", and the acquired image and the prompt word are then submitted to the model.

The model may process the image, and in a case where the second image includes the control device, the model may output the location of the control device (e.g., the coordinates of the region of the object in the image, and/or an image of the region where the control device is located may be directly outputted, etc.). If the image does not include the control device, the model may output a response such as "Not found". With some implementations of the present disclosure, whether an image includes a control device can be detected in a variety of manners, such that the performance of the robot device in acquiring the control device is improved.

According to some implementations of the present disclosure, in response to determining that the second image indicates no control device included in the physical space 160 (i.e., the first physical space), a second physical space associated with the first physical space is determined. It should be understood that the second physical space here is a potential physical space that may include the first object. For example, in a home environment, since the control device may be placed in a drawer of a tea table or television cabinet, it may be determined that the second physical space is the tea table and/or television cabinet. Specifically, during the process of determining the second physical space associated with the first physical space, a prompt word for locating the control device may be acquired based on the second image and the control device; and a response of the machine learning model to the prompt word may be received so as to determine the second physical space.

According to some implementations of the present disclosure, the language model 420 is a trained and fine-tuned model and has rich knowledge of performing tasks in many fields. The language model 420 may determine the image 510 including a television cabinet 520, and recognize the television cabinet 520 as a second physical space. FIG. 5 is merely for a schematic purpose. The language model 420 may process one or more images from different acquiring devices and find one or more second physical spaces that may include the control device 530. For example, it is assumed that a further image includes a tea table, which may be determined as a second physical space.

According to some implementations of the present disclosure, the model may be fine-tuned. For example, the robot device may be instructed to acquire images of various parts of the first physical space in advance. For example, the robot device 110 may open the television cabinet (or tea table) and the like, and acquire relevant images of various objects in the television cabinet. Then, the model may be fine-tuned using the acquired images. In this way, the model can grasp the specific storage location of each object, such that the accuracy of determining the second physical space is increased.

With some implementations of the present disclosure, the powerful processing capabilities and rich knowledge of the model may be used to determine the second physical space that may include the control device. Then, the robot device may be instructed to go to the second physical space to proceed with searching for the control device. Compared with the existing technical solution that a control device is only searched for in a visible physical space through image recognition, the technical solution of the present disclosure may allow for searching of a target object in more potential physical spaces, such that a hidden object that is not directly exposed to the coverage area of the acquiring device is found. In this way, the efficiency and accuracy in locating the control device can be improved, whereby the overall efficiency of performing the user task can be improved.

According to some implementations of the present disclosure, a second physical space may be determined based on image recognition. Specifically, during the process of determining the second physical space associated with the first physical space, a plurality of second objects may be recognized from the second image, a second object may be selected from a plurality of second objects based on a knowledge base, and the space where the second object is located may be taken as the second physical space. Here, the knowledge base may be predefined and include the relationship between the physical space and the object. For example, the knowledge base may include: (control device, television cabinet), (control device, tea table), and so on. The robot device may be instructed to acquire images of various parts of the first physical space in advance. For example, the robot device may open the television cabinet (or tea table, or drawer) and the like, acquire relevant images of various objects in the television cabinet, and then determine the content of the knowledge base.

With some implementations of the present disclosure, each object in the physical space can be determined by using the image recognition technology, such that a potential physical space that may include a target object can be determined. In this way, the efficiency and accuracy in locating the target object can be improved, whereby the overall efficiency of performing the user task can be improved.

In some cases, the robot device may directly enter the second physical space and acquire the target object. Assuming that the second physical space is a "bedroom", the robot device may directly enter the bedroom and take the control device 530 in the bedroom. In some cases, the robot device does not have a direct access to a second physical space. Assuming that the second physical space is a "television cabinet", the robot device needs to determine how to open the drawer of the television cabinet and access the internal space of the television cabinet. According to some implementations of the present disclosure, the robot device may determine, from the second image, an access manner for accessing the second physical space. Then, the robot device may be instructed to access the second physical space in said access manner.

Specifically, a handle of the drawer of the television cabinet may be recognized from the second image. At this point, it can be determined that it is necessary to pull the handle to open the drawer. Alternatively and/or additionally, a corresponding prompt word may be constructed to inquire the model how to open the drawer of the television cabinet. The prompt word may be expressed, for example, as "Determine from the following image how to open the drawer of the television cabinet", and the prompt word and the corresponding image may be sent to the model. At this point, the model may return: pull the handle. Then, the robot device may be instructed to pull the handle to thus open the drawer of the television cabinet and search for the control device. With some implementations of the present disclosure, the powerful processing capabilities of the model may be invoked to solve unknown problems in a complex environment, thereby determining the action that needs to be performed by the robot device. In this way, the capabilities of the robot device to handle complex tasks can be improved, making it possible to perform user tasks in a more accurate manner.

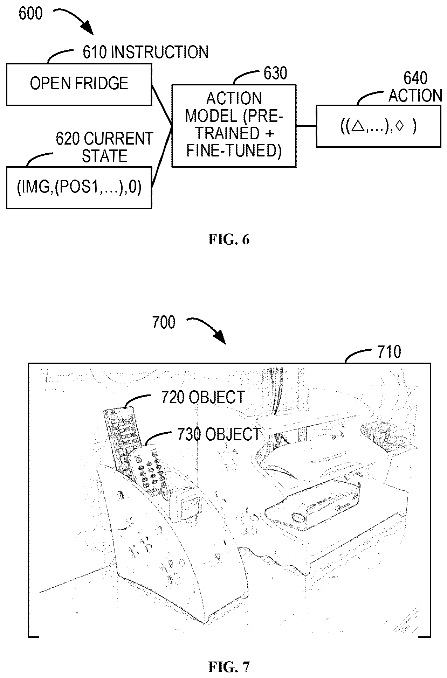

According to some implementations of the present disclosure, an action model may be used to determine a specific action to be performed by the robot device. Referring to FIG. 6, more details are described. FIG. 6 illustrates a block diagram 600 of a process of invoking an action model according to some implementations of the present disclosure. As illustrated in FIG. 6, an action model 630 may be provided, which may determine, based on the current state and instruction of the robot device, the specific action to be performed by the robot device, and the action model may be a pre-trained and fine-tuned model.

It should be understood that the current state may include data from many aspects, for example, an image of the robot device, an image of the environment of the robot device, posture data of a robot arm (e.g., the location of each joint of the robot arm (POS1, ...)), and the state of a tool (e.g., a clamp, a cutter, etc.) fixed to the end of the robot arm. For example, 0 may be used to represent a closed state of the clamp, and 1 may be used to represent an open state of the clamp. The instruction and the current state may be input into the action model 630, and the action model is then used to determine the action to be performed by the robot device based on the instruction and the current state. Here, the action may represent a difference between a current posture and a next posture of the robot device, a difference between a current state and a next state of the tool, and so on.

An instruction 610 (e.g., "Open the drawer of the television cabinet") may be input to the action model 630. Here, the instruction 610 may be expressed in a natural language and may be determined from the response of the language model. Further, the current state of the robot device may be acquired, and the action model 630 may determine a corresponding action 640 based on the input data. For example, the orientation, location, speed, acceleration or the like of each joint in the arm and/or the wheels and/or other movable apparatuses of the robot device at the next time point may be determined. Further, the determined action 640 may be used to control the state of the robot device at the next time point.

With some implementations of the present disclosure, an association relationship may be established between the language model and the action model, and a user task originally input by the user and expressed in a natural language may be converted into a specific action executable by a robot device. In this way, the actions of the robot device can be precisely controlled, making it possible to perform the user task with higher efficiency.

According to some implementations of the present disclosure, if the control device is blocked by a further item, the item may be removed first, and then the control device may be acquired. Specifically, in response to determining that the second image indicates a target object (e.g., a control device) being blocked by a further object in the second physical space, the further object may be moved in order to acquire the target object. Referring to FIG. 7, more details are described. FIG. 7 illustrates a block diagram 700 of a process of moving an object according to some implementations of the present disclosure. As shown in FIG. 7, in an image 710, an object 720 is a control device to be acquired, and an object 730 is located in front of the object 720 and blocks the object 720. At this point, the robot device 110 may be instructed to move the object 730 from its current position to a position that does not impede the acquisition of the object 720.

According to some implementations of the present disclosure, a target position may be determined, and the robot device may be instructed to move the object 730 to the target position. At this point, a motion model generates an action to control the robot device to move the object 730 from its current position to the target position. In this way, the robot device is enabled to address complex problems in a complex environment, making it possible to perform user tasks in a more accurate manner.

According to some implementations of the present disclosure, the exit manner of exiting the second physical space may be determined, and the robot device may be instructed to exit the second physical space in the exit manner. Specifically, after the robot device has got the object 720, a new image may be acquired and a new prompt word may be constructed to inquire the language model about the next instruction. The prompt word may be expressed, for example, as "Please determine the next instruction based on the following image", "What to do next?", and so on. The language model may return "Close the drawer of the television cabinet". At this point, based on the instruction "Close the drawer of the television cabinet" and the current state of the robot device, a corresponding action may be generated to instruct the robot device to close the television cabinet.

According to some implementations of the present disclosure, after the robot device closes the drawer of the television cabinet, the robot device 110 may be instructed to go to the position of the user 120. Specifically, an image may be acquired in real time, and the position of the user 120 may be located in the acquired image. Further, a corresponding instruction may be determined based on the current position (e.g., position A) of the robot device 110 and a user position (e.g., position B), such that the corresponding instruction is determined. At this point, the instruction may be expressed as: Move from position A to position B. At this point, the action model 630 will generate a corresponding action, by which the robot device 110 may be controlled to move from position A to position B according to a determined trajectory. In this way, the robot device 110 can complete the task of "acquiring a control device".

It should be understood that although an example implementation of the present disclosure is described above by taking the Chinese language environment as an example, alternatively and/or additionally, the technical solution according to an example implementation of the present disclosure can be performed in multiple language environments. For example, the robot may be controlled in Chinese, English, Japanese, French or other language environments. Specifically, the robot may be controlled in application environments with different languages based on the multilingual capabilities provided by the machine learning technology. Further, although the process of using a robot device to perform a user task is described above by taking operating the television as an example, alternatively and/or additionally, the robot device may be controlled to perform other user tasks, for example, searching for other items in a room, placing an item to a designated location, and so on.

According to some implementations of the present disclosure, the user may interact with the robot device via language, action, gesture, etc. For example, the user may say a desired user task to be performed, predefine an action to specify the user task, and so on. Specifically, the user may make an action of pointing to the television, and this action may be used as a user task to trigger the robot device to turn on the television. When this action is recognized from the acquired image sequence, the robot device may automatically ask the user whether he/she needs to turn on the television. If a positive response is obtained, the robot device may turn on the television and provide relevant data of the media item to the user.

Alternatively and/or additionally, the user may interact with the robot device via the interacting unit 112, for example, the user inputs a task represented by text and/or image, and controls the robot device to perform the task. Alternatively and/or additionally, the user may specify conditions for performing the task, for example, performing the task immediately, performing the task after a predetermined time, or performing the task when it is determined that a predetermined condition is satisfied (e.g., after the user sits in the living room), etc.

According to some implementations of the present disclosure, a variety of positioning algorithms may be used to determine the locations of the robot device and various objects in a physical environment. For example, a Global Positioning System (GPS) may be deployed at the robot device, and satellite signals may be used to determine the precise location of the robot device. Alternatively and/or additionally, a communication unit may be deployed at the robot device, and the location of the robot device may be determined by means of a signal between the communication unit and a base station and by using a communication network. Alternatively and/or additionally, a Wi-Fi access point may be deployed in the physical space, and the communication unit at the robot device may interact with a Wi-Fi hotspot to determine the location via the Wi-Fi signal strength and the location of the known Wi-Fi access point. Alternatively and/or additionally, the communication unit at the robot device may support a Bluetooth function, in which case a Bluetooth signal and the location of a known Bluetooth device may be used to determine the location of a nearby device. An inertial navigation system may be deployed at the robot device, and an accelerometer and a gyroscope may be used to measure and calculate the movement and direction of the device in the space, thereby determining the location of the robot device.

Alternatively and/or additionally, a visual positioning system may be used to determine the location of the robot device and/or of each object. A map of the physical space may be acquired in advance, and the location of each object may be marked in the map. The robot device may use an echo detecting unit to detect the distance between the robot device and its surrounding objects, and determine the specific location of each object by combining the acquired image and the map of the physical space. Specifically, Computer-Aided Design (CAD) and Geographic Information System (GIS) may be used, and a positioning algorithm may be used to determine the location. Alternatively and/or additionally, a tracking unit may be deployed at an important object in the physical space. For example, the tracking unit may be added to a remote control of a household appliance (e.g., a television remote control, an air conditioner remote control), such that the robot device may acquire the precise location of an important object in a timely manner, and so on.

According to some implementations of the present disclosure, an original location of the robot device itself and a desired destination location may be determined based on the method described above. The robot device may determine a path from the original location to the destination location. For example, surrounding environment images may be continuously acquired, and the path may be continuously updated while ensuring that obstacles are avoided, such that the robot device may move along the path to the destination location.

According to some implementations of the present disclosure, after arriving at the destination location, the robot device may perform a specified task. For example, a specified object may be acquired and moved to a corresponding location. The language model and/or knowledge base may be used to determine constraints, i.e., the constraints that should be followed during the performing of the task. For example, an image and a corresponding prompt word may be acquired, and the image and the prompt word may be input into a language model to in turn receive constraints from the language model. For example, the prompt word may be determined as: "Please determine the constraints that should be followed during the movement of the object XXX based on the following image", or "Please determine the precautions during the movement of the object XXX", etc.

At this point, it can be determined that during the movement of an object (e.g., bottled water, a plate, a bowl, etc.), the original posture of the object should be maintained (e.g., maintained in a vertical direction without tilting). Further, the constraints may be input into the action model. In this case, the corresponding tasks will be performed by means of a series of actions output by the action model while the constraints are ensured. With some implementations of the present disclosure, the safety of the robot device during operation can be ensured, such that accidental damage to the object or the like can be avoided.

With the example implementations of the present disclosure, the robot device can perform user tasks in a complex physical space. In this way, the robot device may start up the electronic device in the physical space according to the user's startup request, acquire the media item provided by the electronic device after the electronic device is started up, and then provide the user with the relevant data of the media item when receiving the user's query request. In this way, the flexibility and accuracy of the robot device in performing tasks in the complex environment can be improved, thereby completing the anticipated user tasks.

### EXAMPLE PROCESS

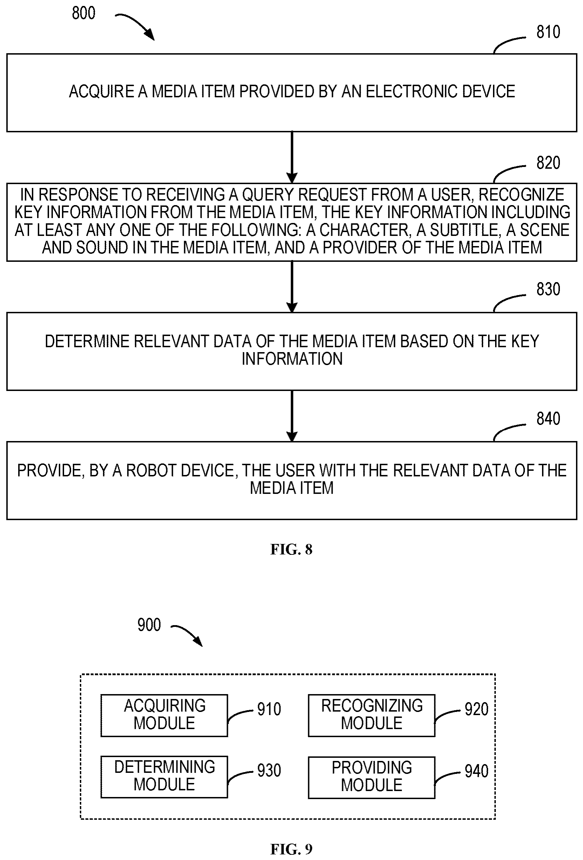

FIG. 8 illustrates a flow chart of a method 800 for performing a user task according to some implementations of the present disclosure. At block 810, a media item provided by an electronic device is acquired. At block 820, key information is recognized from the media item in response to receiving a query request from a user. The key information includes at least any one of the following: a character, a subtitle, a scene and sound in the media item, and a provider of the media item. At block 830, relevant data of the media item are determined based on the key information; and at block 840, a robot device provides the user with the relevant data of the media item.

According to some implementations of the present disclosure, acquiring the media item provided by the electronic device includes: starting up, by the robot device, the electronic device in a physical space in response to receiving a startup request from the user, the user and the robot device being located in the physical space; and acquiring the media item provided by the electronic device.

According to some implementations of the present disclosure, acquiring the media item includes: acquiring an image of the media item, and determining the relevant data based on the key information includes: acquiring a prompt word based on the image, the key information and the query request, the prompt word being used to determine the relevant data; and determining the relevant data based on a first response for the prompt word from a machine learning model.

According to some implementations of the present disclosure, the method 800 further includes: providing, in response to receiving an acquiring request of the user for the relevant data or the media item, the user with a response to the acquiring request.

According to some implementations of the present disclosure, the method 800 further includes: determining a degree of attention of the user to the media item based on state data of the user; and providing, in response to determining that the degree of attention is above a predetermined threshold, additional data associated with the media item.

According to some implementations of the present disclosure, the method 800 further includes: providing the user with a message in response to determining that the degree of attention is below the predetermined threshold, the message being used to ask the user whether the user wishes to switch the media item; determining, in response to receiving a switching request from the user for switching the media item, a data channel that matches the switching request; and switching, by the robot device, a data source of the electronic device to the data channel.

According to some implementations of the present disclosure, determining the data source includes: determining a plurality of types of a plurality of media items provided by a plurality of data sources of the electronic device, respectively; and selecting, from the plurality of data sources, a data source that matches the switching request.

According to some implementations of the present disclosure, switching, by the robot device, the data source of the electronic device to the data channel including: acquiring, by the robot device, a control device for switching the data source of the electronic device; and providing the user with the control device, such that the user inputs a switching instruction for switching the data source.

According to some implementations of the present disclosure, acquiring, by the robot device, the control device includes: acquiring an image of the physical space; locating a position of the control device based on the image; and acquiring, by the robot device, the control device from the position.

According to some implementations of the present disclosure, the relevant data include at least any one of the following: audio data, video data, image data, and text data.

### EXAMPLE APPARATUS AND DEVICE

FIG. 9 illustrates a block diagram of an apparatus 900 for performing a user task according to some implementations of the present disclosure. The apparatus 900 includes: an acquiring module 910 configured to acquire a media item provided by an electronic device; a recognizing module 920 configured to recognize key information from the media item in response to receiving a query request from a user, the key information including at least any one of the following: a character, a subtitle, a scene and sound in the media item, and a provider of the media item; a determining module 930 configured to determine relevant data of the media item based on the key information; and a providing module 940 configured to cause a robot device to provide the user with the relevant data of the media item.

According to some implementations of the present disclosure, the acquiring module is further configured to: start up, by the robot device, the electronic device in a physical space in response to receiving a startup request from the user, the user and the robot device being located in the physical space; and acquire the media item provided by the electronic device.

According to some implementations of the present disclosure, the acquiring module 910 is further configured to: acquire an image of the media item, and the determining module 930 is further configured to: acquire a prompt word based on the image, the key information and the query request, the prompt word being used to determine the relevant data; and determine the relevant data based on a first response of a machine learning model to the prompt word.

According to some implementations of the present disclosure, the determining module 930 is further configured to: provide, in response to receiving an acquiring request of the user for the relevant data or the media item, the user with a response to the acquiring request.

According to some implementations of the present disclosure, the determining module 930 is further configured to: determine a degree of attention of the user to the media item based on state data of the user; and provide, in response to determining that the degree of attention is above a predetermined threshold, additional data associated with the media item.

According to some implementations of the present disclosure, the determining module 930 is further configured to: provide the user with a message in response to determining that the degree of attention is below the predetermined threshold, the message being used to ask the user whether the user wishes to switch the media item; determine, in response to receiving a switching request of the user for switching the media item, a data channel that matches the switching request; and switch, by the robot device, a data source of the electronic device to the data channel.

According to some implementations of the present disclosure, the determining module 930 is further configured to: determine a plurality of types of a plurality of media items provided by a plurality of data sources of the electronic device, respectively; and select a data source, from the plurality of data sources, that matches the switching request.

According to some implementations of the present disclosure, the determining module 930 is further configured to: cause the robot device to acquire a control device for switching the data source of the electronic device; and provide the user with the control device, such that the user inputs a switching instruction for switching the data source.

According to some implementations of the present disclosure, the determining module 930 is further configured to: acquire an image of the physical space; locating a position of the control device based on the image; and cause the robot device to acquire the control device from the position.

According to some implementations of the present disclosure, the relevant data include at least any one of the following: audio data, video data, image data, and text data.

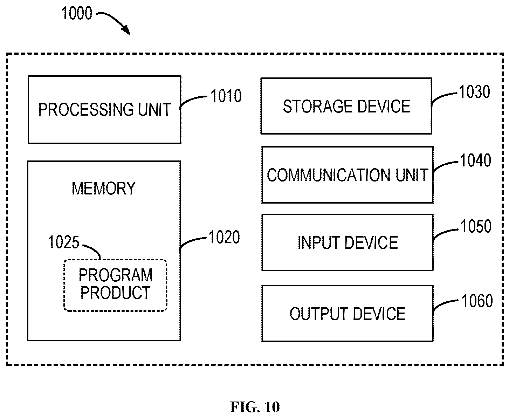

FIG. 10 illustrates a block diagram of a device 1000 capable of implementing many implementations of the present disclosure. It should be understood that a computing device 1000 shown in FIG. 10 is merely example and should not be construed as constituting any limitation on the functionality and scope of the implementations described herein. The computing device 1000 illustrated in FIG. 10 may be used to implement the method described above.

As illustrated in FIG. 10, the computing device 1000 is in the form of a general-purpose computing device. The components of the computing device 1000 may include, but are not limited to, one or more processors or processing units 1010, a memory 1020, a storage device 1030, one or more communication units 1040, one or more input devices 1050, and one or more output devices 1060. The processing unit 1010 may be a real or virtual processor and may be capable of performing various processes according to a program stored in the memory 1020. In a multiprocessor system, a plurality of processing units executes computer-executable instructions in parallel to improve the parallel processing capabilities of the computing device 1000.

The computing device 1000 typically includes a plurality of computer storage media. Such media may be any available media accessible to the computing device 1000, including but not limited to volatile and non-volatile media, and removable and non-removable media. The memory 1020 may be a volatile memory (e.g., a register, cache, a random-access memory (RAM)), a non-volatile memory (e.g., a read-only memory (ROM), an electrically erasable programmable read-only memory (EEPROM), a flash memory), or their combinations. The storage device 1030 may be a removable or non-removable medium, and may include a machine-readable medium such as a flash drive, a magnetic disk, or any other media that may be capable of storing information and/or data (e.g., training data for training purposes) and that may be accessible within the computing device 1000.

The computing device 1000 may further include additional removable/non-removable, volatile/non-volatile storage media. Although not shown in FIG. 10, a disk drive for reading from or writing into a removable, nonvolatile magnetic disk (e.g., a "floppy disk") and an optical drive for reading from or writing into a removable, nonvolatile optical disk may be provided. In these cases, each drive may be connected to a bus (not shown) by one or more data medium interfaces. The memory 1020 may include a computer program product 1025 having one or more program modules configured to perform various methods or actions of various implementations of the present disclosure.

The communication unit 1040 enables communication with other computing devices through a communication medium. Additionally, the functionality of the components of the computing device 1000 may be implemented in a single computing cluster or multiple computing machines that may communicate through a communication connection. Thus, the computing device 1000 may operate in a networked environment using a logical connection with one or more other servers, a network personal computer (PC), or a further network node.

The input device 1050 may be one or more input devices, for example, a mouse, a keyboard, a tracking ball, etc. The output device 1060 may be one or more output devices, for example, a display, a speaker, a printer, etc. The computing device 1000 may also communicate with one or more external devices (not shown) through the communication unit 1040 as needed, and the external devices such as a storage device and a display device communicate with one or more devices that enable a user to interact with the computing device 1000, or communicate with any device (e.g., a network card, a modem, etc.) that enables the computing device 1000 to communicate with one or more other computing devices. Such communication may be performed via an input/output (I/O) interface (not shown).

According to an example implementation of the present disclosure, a computer-readable storage medium is provided, on which computer executable instructions are stored, where the computer-executable instructions are executed by a processor to implement the method described above. According to an example implementation of the present disclosure, a computer program product is further provided; the computer program product is tangibly stored on a non-transitory computer-readable medium and includes computer-executable instructions, and the computer-executable instructions are executed by a processor to implement the method described above. According to an example implementation of the present disclosure, a computer program product is provided, on which a computer program is stored, and the program, when executed by a processor, implements the method described above.

Various aspects of the present disclosure are described herein with reference to flowcharts and/or block diagrams of methods, apparatuses, devices, and computer program products implemented according to the present disclosure. It should be understood that each block of the flowcharts and/or block diagrams, and the combination of blocks in the flowcharts and/or block diagrams, can be implemented by computer-readable program instructions.

These computer-readable program instructions can be provided to a processing unit of a general-purpose computer, a special-purpose computer, or other programmable data processing apparatuses, thereby producing a machine, such that when these instructions are executed by the processing unit of the computer or other programmable data processing apparatuses, an apparatus is produced to implement the functions/actions specified in one or more blocks in the flowcharts and/or block diagrams. These computer-readable program instructions may also be stored in a computer-readable storage medium, and these instructions enable a computer, a programmable data processing apparatus and/or other devices to work in a specific manner, such that the computer-readable media storing instructions may include an article of manufacture including instructions for implementing various aspects of the functions/actions specified in one or more blocks in the flowcharts and/or block diagrams.

The computer-readable program instructions may be loaded onto a computer, other programmable data processing apparatuses, or other devices, allowing for execution of a series of operating steps on the computer, other programmable data processing apparatuses and/or other devices to generate a computer-implemented process, such that the instructions executed on the computer, other programmable data processing apparatuses and/or other devices implement the functions/actions specified in one or more blocks in the flowcharts and/or block diagrams.

The flowcharts and block diagrams in the accompanying drawings show possible architectures, functions, and operations of systems, methods, and computer program products according to various implementations of the present disclosure. In this regard, each block in the flowcharts and/or block diagrams may represent a portion of a module, program segment or instruction that contains one or more executable instructions for implementing a specified logical function. In some alternative implementations, the functions marked in the blocks may occur in a different order than that marked in the accompanying drawings. For example, two consecutive blocks may actually be executed substantially in parallel, or they may sometimes be executed in a reverse order, depending on the functions involved. It should also be noted that each block in the block diagrams and/or flowcharts, and a combination of blocks in the block diagrams and/or flowcharts, may be implemented by a dedicated hardware-based system that performs the specified functions or actions, or may be implemented by a combination of dedicated hardware and computer instructions.

Various implementations of the present disclosure have been disclosed above, and the descriptions thereof are example and non-exhaustive, and are not limited to the disclosed implementations. Many modifications and variations are obvious to those of ordinary skill in the art without departing from the scope and spirit of the disclosed implementations. The terms used herein are selected to best explain the principles, practical applications or improvements of technologies in the market of the various implementations, or to enable others of ordinary skill in the art to understand the various implementations disclosed herein.

## Claims

1. A method for performing a user task, comprising:
acquiring a media item provided by an electronic device;
in response to receiving a query request from a user, recognizing key information from the media item, the key information comprising at least one of the following: a character, a subtitle, a scene and sound in the media item, and a provider of the media item;
determining relevant data of the media item based on the key information; and
providing, by a robot device, the user with the relevant data of the media item.

2. The method of claim 1, wherein acquiring the media item provided by the electronic device comprises:
starting up, by the robot device, the electronic device in a physical space in response to receiving a startup request from the user, the user and the robot device being located in the physical space; and
acquiring the media item provided by the electronic device.

3. The method of claim 1, wherein acquiring the media item comprises: acquiring an image of the media item, and determining the relevant data based on the key information comprises:
acquiring a prompt word based on the image, the key information and the query request, the prompt word being used to determine the relevant data; and
determining the relevant data based on a first response for the prompt word from a machine learning model.

4. The method of claim 1, further comprising: in response to receiving an acquiring request of the user for the relevant data or the media item, providing the user with a response to the acquiring request.

5. The method of claim 4, further comprising:
determining a degree of attention of the user to the media item based on state data of the user; and
providing, in response to determining that the degree of attention is above a predetermined threshold, additional data associated with the media item.

6. The method of claim 5, further comprising:
providing the user with a message in response to determining that the degree of attention is below the predetermined threshold, the message being used to ask the user whether the user wishes to switch the media item;
determining, in response to receiving a switching request from the user for switching the media item, a data channel that matches the switching request; and
switching, by the robot device, a data source of the electronic device to the data channel.

7. The method of claim 6, wherein determining the data source comprises:
determining a plurality of types of a plurality of media items provided by a plurality of data sources of the electronic device, respectively; and
selecting, from the plurality of data sources, a data source that matches the switching request.

8. The method of claim 6, wherein switching, by the robot device, the data source of the electronic device to the data channel comprises:
acquiring, by the robot device, a control device for switching the data source of the electronic device;
and
providing the user with the control device, such that the user inputs a switching instruction for switching the data source.

9. The method of claim 6, wherein acquiring, by the robot device, the control device comprises:
acquiring an image of the physical space;
locating a position of the control device based on the image; and
acquiring, by the robot device, the control device from the position.

10. The method of claim 1, wherein the relevant data comprise at least any one of the following: audio data, video data, image data, and text data.

11. An apparatus for performing a user task, comprising:
an acquiring module configured to acquire a media item provided by an electronic device;
a recognizing module configured to recognize key information from the media item in response to receiving a query request from a user, the key information comprising at least one of the following: a character, a subtitle, a scene and sound in the media item, and a provider of the media item;
a determining module configured to determine relevant data of the media item based on the key information; and
a providing module configured to cause a robot device to provide the user with the relevant data of the media item.

12. An electronic device, comprising:
at least one processing unit; and
at least one memory coupled to the at least one processing unit and storing instructions for execution by the at least one processing unit, the instructions, when executed by the at least one processing unit, causing the electronic device to execute the method according to any one of claims 1 to 10.

13. A computer-readable storage medium storing a computer program thereon, wherein the computer program, when executed by a processor, causes the processor to implement the method according to any one of claims 1 to 10.

14. A computer program product, comprising a computer program, wherein the computer program, when executed by a processor, implements the method according to any one of claims 1 to 10.
